# FASCICULE DE BREVET EUROPEEN

(11) **EP 2 726 012 B1**
(45) Date de publication et mention de la délivrance du brevet: **30.05.2018**
(21) Numéro de dépôt: 12732629.6
(22) Date de dépôt: 29.06.2012
(51) Int. Cl.: A61C 8/00, A61C 1/08

(54) **DISPOSITIF POUR LA POSE D'UNE PROTHÈSE DENTAIRE**
VORRICHTUNG ZUR BEFESTIGUNG EINER ZAHNPROTHESE
DEVICE FOR FIXING A DENTAL PROSTHESIS

(30) Priorité: 01.07.2011 FR 1155940
(43) Date de publication de la demande: 07.05.2014
(73) Titulaire: Euroteknika, 74700 Sallanches (FR)
(72) Inventeur: VEILLARD, Alain, 74920 Combloux (FR); PERRIN, Olivier, 74190 Passy (FR); BOUTTIE, Denis, 74190 Passy (FR); CALVAT, Banjamin, 73400 Ugine (FR); LÉGER, Théo, 74300 Magland (FR); LANCIEUX, Cédric, 74700 Sallanches (FR)
(74) Mandataire: Novaimo
(86) Numéro de dépôt international: PCT/EP2012/062664
(87) Numéro de publication internationale: WO 2013/004606

(56) Documents cités:
- EP-A1- 1 205 159
- WO-A1-03/071972
- DE-A1- 19 731 658
- US-A1- 2010 183 998
- US-B1- 6 319 000

## Description

La présente invention se rapporte à un kit de pose de prothèse dentaire comprenant une barre implantaire, au moins un implant et une bague.

Le traitement des personnes en grande partie édentées est délicat, repose aujourd'hui sur un procédé complexe et un outillage non optimal. Les procédés existants possèdent en effet tout ou partie des inconvénients suivants :
- Ils utilisent des implants fixés dans la structure osseuse, aussi appelée « massif osseux », de diamètre important, supérieur à 3 mm, ce qui nécessite plusieurs opérations de forage avec des forets de diamètre de plus en plus important pour former progressivement une ouverture dans le massif osseux de diamètre correspondant aux implants à visser ;
- Ils nécessitent des interventions longues et complexes, avec une interruption pour fabriquer une prothèse en cours d'intervention ;
- Ils proposent des prothèses volumineuses, comprenant notamment des parties de gencives épaisses, ce qui donne un résultat peu esthétique et peu réaliste ;
- Ils sont peu adaptés au cas des personnes dont le volume du massif osseux est fortement réduit.
Le document US 2010/183998 décrit par exemple un kit de pose d'une prothèse dentaire, comprenant une barre implantaire pour la pose d'une prothèse dentaire et des implants, la barre implantaire comprenant au niveau de sa surface supérieure des puits pour l'insertion des implants, ainsi que des bagues destinées à une fixation au sein des puits de la barre implantaire et coopérant avec les implants.

Le but de l'invention est donc de fournir une solution améliorée pour la pose d'une prothèse dentaire, qui ne présente pas tout ou partie des inconvénients mentionnés ci-dessus.

Plus précisément, l'invention cherche à atteindre les objets suivants :
Un premier objet de l'invention est une solution pour la pose d'une prothèse dentaire permettant la mise en oeuvre d'un procédé de pose simplifié et accéléré.

Un second objet de l'invention est une solution pour la pose d'une prothèse dentaire permettant d'atteindre un résultat d'esthétique attrayante grâce à un volume et une forme proches de la réalité.

A cet effet, l'invention repose sur un kit de pose d'une prothèse dentaire, comprenant une barre implantaire pour la pose d'une prothèse dentaire et au moins un implant, la barre implantaire comprend au moins un puits pour l'insertion d'un implant, dont le diamètre est compris entre 2,2 et 3,5 mm inclus, ou entre 2,3 et 3,4 mm inclus, ou entre 2,4 et 3,3 mm inclus, ou entre 2,5 et 3 mm inclus, ou entre 2,6 et 2,9 mm inclus, ou entre 2,7 et 2,8 mm inclus, et le kit de pose comprend au moins une bague destinée à une fixation au sein du au moins un puits de la barre implantaire et à une coopération avec l' implant.

Tous ses puits destinés à l'insertion et au logement d'un implant peuvent présenter un diamètre entre 2,5 et 3 mm, ou entre 2,6 et 2,9 mm, ou entre 2,7 et 2,8 mm, inclus.

Le au moins un puits peut présenter une direction sensiblement perpendiculaire à la surface supérieure de la barre implantaire.

La barre implantaire peut comprendre une surface formant butée pour un implant au sein d'un puits.

Un puits peut comprendre une extension sous sa surface inférieure, apte à venir au-dessus de la gencive ou sur un massif osseux.

La barre implantaire peut comprendre au moins un puits présentant une partie filetée dans une partie basse pour coopérer avec un filetage correspondant d'un implant.

La barre implantaire peut comprendre une surface formant butée pour un implant au sein d'au moins un de ses puits et sa partie filetée peut se trouver sous cette surface formant butée et/ou sous la surface inférieure de la barre implantaire.

La barre implantaire peut comprendre au moins une ouverture de diamètre plus petit que celui des puits pour le positionnement d'une vis d'ostéosynthèse. Par exemple, le diamètre d'une ouverture peut être inférieur à 2 mm, ou inférieur à 1,5 mm, ou inférieur ou égal à 1,3 mm.

La barre implantaire peut comprendre au moins deux puits ou au moins trois puits et/ou peut comprendre au moins deux ouvertures ou au moins trois ouvertures.

La barre implantaire peut comprendre une section carrée ou rectangulaire ou arrondie, interrompue par des puits et/ou des ouvertures sensiblement cylindriques.

La barre implantaire peut être en matériau métallique, et/ou peut comprendre du titane et/ou un alliage de titane. Le kit de l'invention comprend également un guide. Le guide peut comprendre des ouvertures dans lesquelles peuvent se loger les puits de la barre implantaire.

Le kit de pose d'une prothèse dentaire peut comprendre tout ou partie des composants supplémentaires suivants :
- des implants de diamètre compris entre 2,5 et 3 mm, ou entre 2,6 et 2,9 mm, ou entre 2,7 et 2,8 mm, inclus ; et/ou
- des vis d'ostéosynthèse de diamètre inférieur à 2 mm, ou inférieur à 1,5 mm, ou inférieur ou égal à 1,3 mm ; et/ou
- des piliers pour une fixation sur un implant ; et/ou
- une prothèse dentaire.
Un support informatique lisible par une unité de gestion, comprend un programme informatique enregistré comprenant des moyens de codes de programme informatique de mise en oeuvre d'un procédé de fabrication d'une barre implantaire telle que décrite précédemment.

Ces objets, caractéristiques et avantages de la présente invention seront exposés en détail dans la description suivante de modes d'exécution particuliers faits à titre non-limitatif en relation avec les figures jointes parmi lesquelles :
Les figures 1 a et 1b représentent respectivement des parties de mâchoire à traiter dans deux configurations particulières choisies à titre d'exemple.
Les figures 2a et 2b représentent respectivement les parties de mâchoire à traiter recouvertes par un guide selon un mode de réalisation.
Les figures 3a et 3b représentent respectivement les parties de mâchoire à traiter après un forage gingival à l'aide du guide.
Les figures 4a et 4b représentent le guide et la barre implantaire en configuration assemblée.
Les figures 5a et 5b représentent respectivement en perspective de dessus les guides utilisés dans les deux configurations particulières selon un mode de réalisation.
Les figures 6a et 6b représentent respectivement en perspective de dessus les barres implantaires utilisées dans les deux configurations particulières selon un mode de réalisation.
La figure 7a représente une étape de fixation d'une barre implantaire à l'aide de vis d'ostéosynthèse.
Les figures 8a et 8b représentent respectivement les barres implantaires après fixation dans les deux configurations particulières.
Les figures 9a et 9b représentent respectivement la pose d'implants au travers les barres implantaires dans les deux configurations particulières.
La figure 10b représente la pose de la prothèse dans le cas de la seconde configuration envisagée.
La figure 11 représente en coupe de côté au niveau d'un implant une phase de pose d'un implant au travers une barre implantaire selon un premier mode de réalisation.
La figure 12 représente en coupe de côté au niveau d'un implant un implant positionné au sein du massif osseux d'une mâchoire au travers une barre implantaire selon le premier mode de réalisation.
La figure 13 représente en coupe de côté au niveau d'un implant un implant et une vis d'ostéosynthèse positionnés au sein du massif osseux d'une mâchoire au travers une barre implantaire selon le premier mode de réalisation.
La figure 14 représente un implant selon un mode de réalisation.
La figure 15 représente en coupe de côté au niveau d'un implant un implant positionné au travers une barre implantaire selon un second mode de réalisation qui s'inscrit dans la présente invention.
La figure 16 représente en coupe de côté au niveau d'un implant des implants et des vis d'ostéosynthèse positionnés au sein du massif osseux d'une mâchoire au travers une barre implantaire selon le second mode de réalisation.
La figure 17 représente un implant selon le second mode de réalisation.
La figure 18 représente en perspective une barre implantaire utilisée dans un troisième mode de réalisation qui s'inscrit dans la présente invention.
La figure 19 représente en perspective de dessous un guide utilisé dans le troisième mode de réalisation.
La figure 20 représente en perspective de dessous la barre implantaire logée dans le guide selon le troisième mode de réalisation.
La figure 21 représente en perspective de dessus la barre implantaire logée dans le guide selon le troisième mode de réalisation.
La figure 22 représente en coupe de côté et en vue éclatée les différents éléments pour la fixation d'une prothèse selon le troisième mode de réalisation.
La figure 23 représente en coupe de côté les différents éléments assemblés pour la fixation d'une prothèse selon le troisième mode de réalisation.
La figure 24 représente une vue de côté d'un implant selon le troisième mode de réalisation.
La figure 25 représente en perspective de dessus l'implant selon le troisième mode de réalisation.
Les figures 26 et 27 représentent des vues en perspective d'une bague selon le troisième mode de réalisation.
La figure 28 représente en coupe de côté au niveau d'un implant des implants positionnés au sein du massif osseux d'une mâchoire au travers une barre implantaire selon le troisième mode de réalisation.
La figure 29 représente en coupe de côté au niveau d'un implant des implants positionnés au sein du massif osseux d'une mâchoire au travers une barre implantaire selon une variante du troisième mode de réalisation.
La figure 30 représente en coupe de côté au niveau d'un implant un implant positionné au sein du massif osseux d'une mâchoire de manière inclinée au travers une barre implantaire selon une variante du troisième mode de réalisation.
Les figures 31 à 34 représentent des vues en perspective du dispositif de fixation d'une prothèse avec différentes variantes de moyens de fixation d'une prothèse selon le troisième mode de réalisation.

L'invention repose sur une nouvelle approche de traitement, et sur une dentition artificielle plus proche de la réalité, avec une esthétique très acceptable, adaptée à une implantation plus facile.

Pour bien comprendre cette nouvelle approche, le traitement mis en oeuvre et les dispositifs associés vont être détaillés, à partir de deux configurations particulières d'une partie de mâchoire : la première configuration, illustrée par les figures portant l'indice a, concerne une mâchoire inférieure totalement édentée, et la seconde configuration, illustrée par les figures portant l'indice b, représente une partie restreinte d'une mâchoire inférieure. Naturellement, le même principe peut être implémenté pour toute partie d'une mâchoire, inférieure et/ou supérieure, impliquant au moins deux ou au moins trois implants. D'autre part, la direction verticale et les termes « haut » et « bas » seront utilisés par la suite dans le référentiel des dents, selon une direction orientée depuis la gencive jusqu'au sommet des dents. Ainsi, les termes « haut » et « supérieur » désignent donc les éléments orientés vers le sommet des dents et les termes « bas » et « inférieur » les éléments orientés vers la gencive.

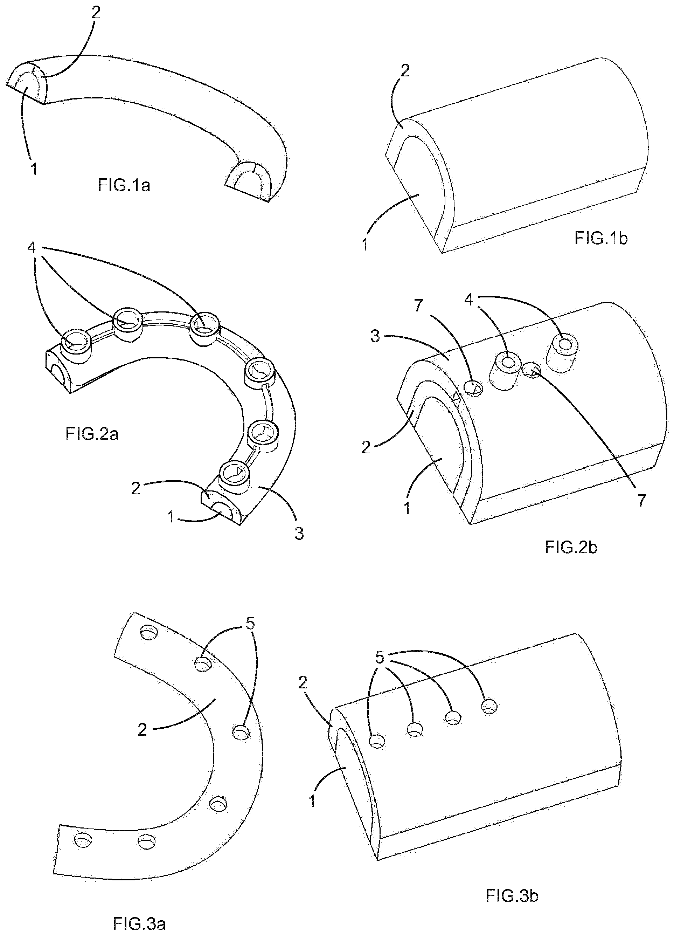

Les figures 1a et 1b représentent ainsi schématiquement respectivement une arcade maxillaire et une partie de mâchoire à traiter, ayant perdu leurs dents d'origine, comprenant un massif osseux 1 recouvert par une gencive 2.

Une première phase amont du traitement repose sur la préparation de la future prothèse dentaire, destinée à remplacer les dents d'origine en reproduisant au mieux leurs formes et caractéristiques mécaniques, par un traitement informatique basé sur une méthode d'imagerie médicale. Plus précisément, un scan de la mâchoire de la personne concernée est réalisé, afin d'obtenir une image de l'ossature de la mâchoire et des éventuelles dents restantes. Un traitement logiciel permet de déterminer les emplacements les plus adaptés pour la pose d'implants dans l'ossature de la mâchoire et la prothèse dentaire la plus proche de la dentition d'origine, afin d'obtenir un résultat le plus fidèle possible et le plus adapté à l'ossature existante pour un maintien durable. Ce traitement informatique se fait par toute solution existante, l'invention ne porte pas spécifiquement sur cette phase amont.

Lorsque ce positionnement est déterminé, une étape préalable au traitement qui va être décrit ci-dessous consiste en la fabrication d'une barre implantaire 10 et d'un guide ou support 3 en résine, qui forment les deux composants de base pour la pose des implants, et d'une prothèse dentaire 30.

Un kit de pose de prothèse dentaire est alors formé et transmis à un opérateur, comprenant une barre implantaire, au moins un implant et une bague, et éventuellement un support de cette barre implantaire, que nous appellerons guide par la suite. En variante, le kit de pose d'une prothèse dentaire peut de plus comprendre tout ou partie des composants suivants, qui seront décrits en détail par la suite, et qui peuvent aussi être distribués séparément : des implants, et/ou des vis d'ostéosynthèse, et/ou des piliers ou bagues pour une coopération ou fixation sur un implant, et/ou une prothèse dentaire.

La première étape du traitement consiste à positionner le guide 3 en résine sur la gencive, comme représenté par les figures 2a et 2b, et à le fixer par des aiguilles de verrouillage pour obtenir son maintien. Ce guide comprend des ouvertures 4 aménagées sur sa surface supérieure, qui permettent de guider une première opération de forage de la gencive 2 aux emplacements précis destinés à la pose des implants et éventuellement des vis d'ostéosynthèse, comme cela sera décrit par la suite. Ce premier forage réalise une découpe gingivale qui s'arrête au niveau du contact avec le massif osseux 1, de sorte à réaliser des ouvertures correspondantes 5 dans la gencive.

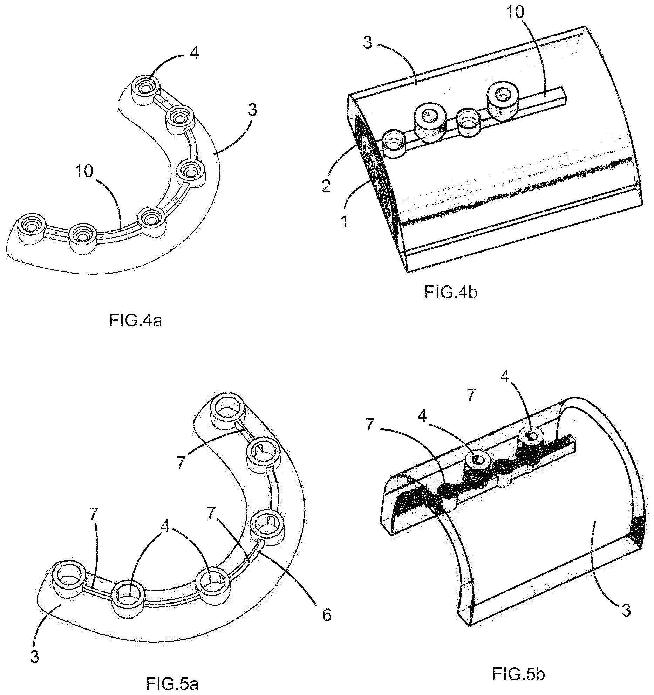

Une seconde étape consiste en un retrait du guide, comme cela est visible sur les figures 3a et 3b, puis l'intégration de la barre implantaire 10 à l'intérieur du guide, du côté de sa face inférieure, pour former un assemblage représenté sur les figures 4a et 4b. Cet assemblage est ensuite repositionné sur la gencive 2 sur la zone à traiter.

Le guide 3 utilisé est plus précisément représenté en perspective de dessus par les figures 5a et 5b pour respectivement les deux configurations particulières envisagées. Il comprend une forme qui épouse la surface supérieure de la mâchoire, présente une section sensiblement semi-circulaire, en forme de gouttière inversée. Des premières ouvertures 4 circulaires sont prévues, dont le diamètre correspond précisément au forage de la gencive, comme cela a été explicité ci-dessus, en vue du futur positionnement d'implants. Des secondes ouvertures 7 plus petites sont destinées au passage des futures vis d'ostéosynthèse. Dans le premier cas de la figure 5a, le guide comprend de plus une fente 6 ou rainure qui s'étend sur toute la longueur au niveau de la partie centrale de la face inférieure du guide. Cette rainure 6 est représentée en transparence à travers la paroi supérieure du guide sur certaines figures. Le guide est de préférence en résine, comprend éventuellement des tubes en titane.

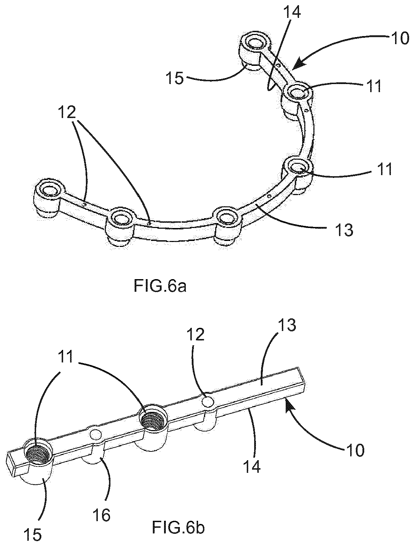

La barre implantaire 10 est plus particulièrement illustrée par les figures 6a et 6b. Elle comprend une section sensiblement rectangulaire ou carrée, voire en variante une section différente, comprenant par exemple des arrondis, formant une surface supérieure 13 et une surface inférieure 14 sensiblement horizontales, interrompues par des portions cylindriques d'axe sensiblement vertical, que nous appellerons simplement « puits » 11, destinés au logement des implants, comme cela sera détaillé par la suite. La barre implantaire 10 comprend de plus des secondes ouvertures 12 traversantes supplémentaires, de plus petites dimensions que les puits 11, orientées de même sensiblement verticalement, destinées à recevoir des vis d'ostéosynthèse de maintien, comme cela est explicité ci-dessous. Les puits 11 comprennent une portion inférieure 15 qui s'étend sous la surface inférieure 14 de la barre implantaire. De même, les ouvertures 12 sont prolongées par des extensions 16 sous la surface inférieure 14 de la barre implantaire. La barre implantaire forme finalement une armature de la prothèse dentaire et se trouve de préférence en matériau métallique, comprend avantageusement du titane et/ou un alliage de titane et/ou du chrome-cobalt.

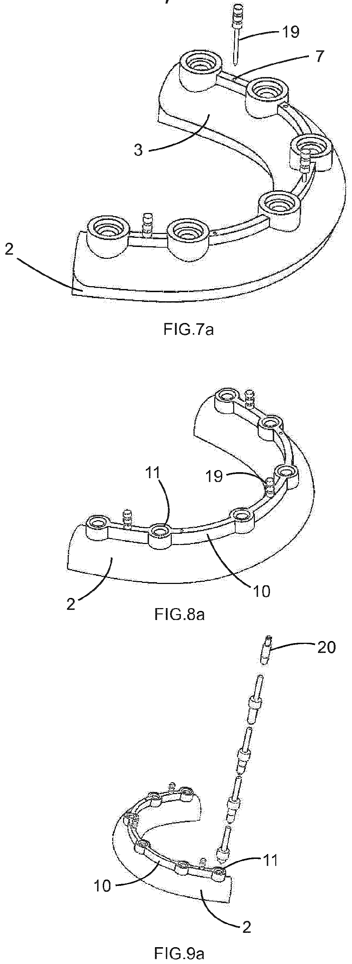

Dans la seconde étape de repositionnement, les puits 11 de la barre implantaire 10 viennent se loger dans les ouvertures 4 du guide 3, par la face inférieure du guide 3, et leurs extensions inférieures 15, de même que les extensions 16 des ouvertures 12, se logent tout ou partie dans les découpes gingivales pratiquées à l'étape précédente, de sorte à venir en appui sur le massif osseux ou à rester au-dessus de la gencive selon deux modes de réalisation qui seront détaillés par la suite. De plus, les secondes ouvertures 12 de la barre implantaire 10 sont de même accessibles au travers des ouvertures 7 du guide 3. Ensuite, des vis d'ostéosynthèse 19 sont positionnées au travers des secondes ouvertures 7 du guide 3 et des secondes ouvertures 12 de la barre implantaire 10, comme cela est illustré par la figure 7a. Les têtes de ces vis d'ostéosynthèse 19 viennent en appui sur la surface supérieure 13 de la barre et assurent son maintien dans le massif osseux 1 de la personne traitée.

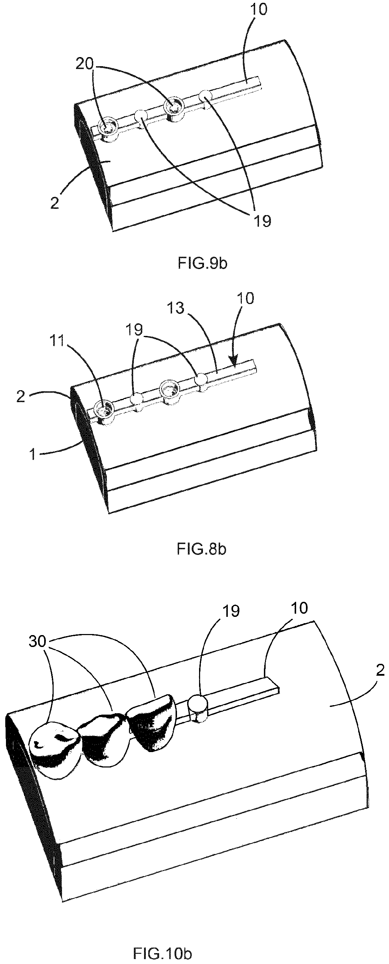

Dans une troisième étape, le guide 3 est retiré dans une direction sensiblement verticale, laissant en position la barre implantaire seule, comme cela apparaît sur les figures 8a et 8b. La barre implantaire 10 est maintenant définitivement fixée en place avec précision sur la mâchoire et suffisamment maintenue pour la poursuite du traitement qui consiste en la pose des implants, comme illustré sur les figures 9a et 9b. Pour cela, un forage du massif osseux est réalisé, au travers des puits 11 de la barre implantaire 10, puis la fixation des implants 20 au travers des puits 11 de la barre implantaire est mise en oeuvre. En remarque, les vis d'ostéosynthèse 19 ont pour fonction principale le maintien de la barre implantaire lors de cette étape de pose des implants 20. Elles peuvent être conservées ou en variante retirées après la fin de l'opération.

Les implants 20 présentent un diamètre plus important que les vis d'ostéosynthèse 19 et une longueur plus importante, et ont pour fonction d'assurer le maintien de la prothèse et de son armature formée par la barre implantaire, lors de son utilisation quotidienne durant laquelle il est notamment nécessaire de supporter mécaniquement les efforts mécaniques très importants appliqués lors de la mastication.

Enfin, une quatrième étape consiste en la fixation de la prothèse dentaire 30 sur la barre implantaire 10, pour atteindre le résultat fini visible par exemple sur la figure 10b. Cette fixation peut se faire par un sellage avec un ciment adapté ou un vissage, ou toute autre solution de fixation.

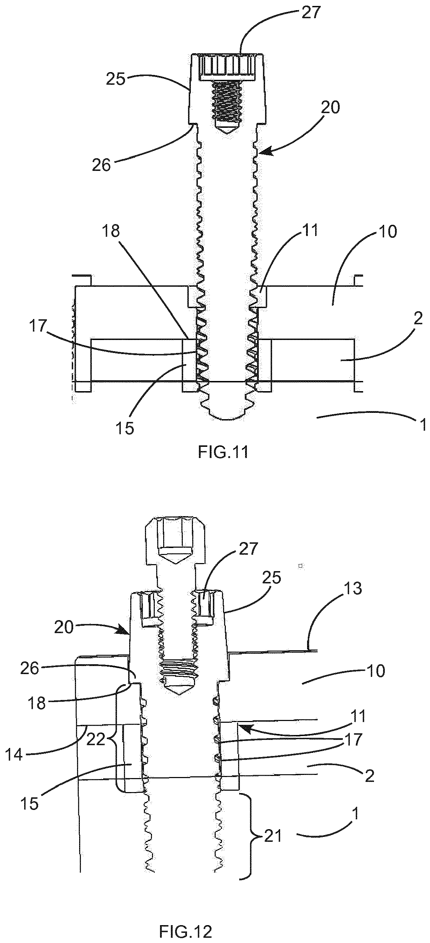

Les figures 11 à 14 illustrent différentes vues agrandies et en coupe de détails des composants présentés ci-dessus, selon un premier mode de réalisation. La figure 11 montre une phase intermédiaire de pose d'un implant 20 dans le massif osseux 1 au travers un puits 11 de la barre implantaire 10. Pour cela, le puits 11 comprend un filetage intérieur 17 compatible avec le filetage de l'implant, qui permet son vissage à l'intérieur du puits 11.

La figure 12 représente l'implant 20 en position finale. Il comprend une première partie basse 21 vissée dans le massif osseux 1, qui va assurer un maintien performant de l'ensemble de la structure d'accueil de la prothèse dentaire, notamment par un renforcement avec le temps par ostéo-intégration de l'implant. Une seconde partie 22 plus haute de l'implant 20 comprend un second filetage qui reste en coopération avec le filetage intérieur 17 de la barre implantaire dans le puits 11, dont l'extrémité inférieure de l'extension inférieure 15 vient en appui sur la surface supérieure du massif osseux 1, au travers la gencive 2. Ce second filetage de l'implant empêche tout mouvement vertical de la barre implantaire 10, qui reste dans cette même position, même si le massif osseux 1 se dégrade, par exemple avec son vieillissement.

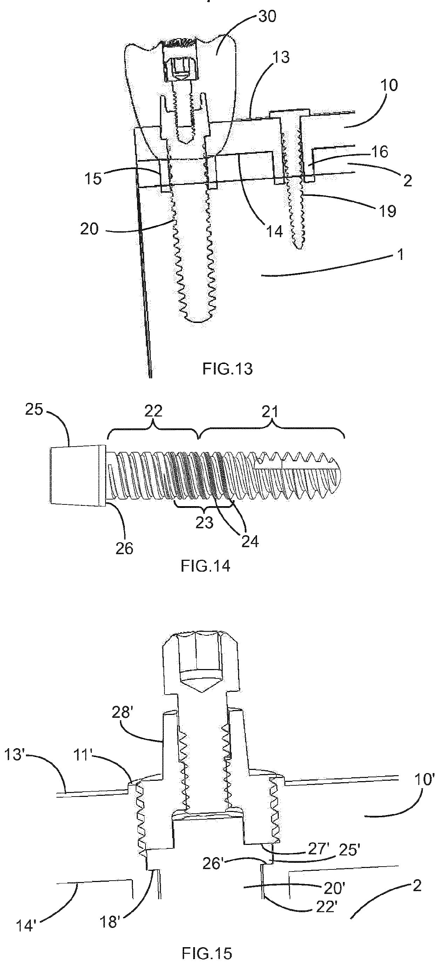

En remarque, dans ce mode de réalisation illustré, l'implant 20 comprend une tête 25 qui comprend une surface inférieure formant une butée 26 en appui sur une surface 18 plane aménagée dans la partie supérieure du puits 11, qui forme une butée correspondante. Cette butée assure le bon positionnement de l'implant 20, dont le vissage doit être poursuivi jusqu'à la butée, et assure le maintien de la barre implantaire 11 et participe notamment à empêcher tout mouvement vers le haut. La tête 25 de l'implant 20 comprend de plus une partie cylindrique creuse 27 filetée au niveau de son extrémité supérieure, orientée selon une direction verticale, prévue pour la fixation par vissage d'une prothèse 30, comme cela est représenté sur la figure 13.

La figure 14 illustre plus précisément un implant 20 utilisé dans ce mode de réalisation. Sa première partie 21 basse comprend un premier filetage dont les dents présentent une section triangulaire et/ou trapézoïdale. Plus généralement, ce premier filetage pourra être de tout type adapté pour une compatibilité optimale avec une structure osseuse puisque cette première partie 21 est destinée à un vissage et une intégration dans une structure osseuse. La seconde partie 22 de l'implant 20, positionnée entre sa tête 25 et sa première partie 21, comprend un second filetage destiné à coopérer avec le filetage d'une barre implantaire 10. Dans ce mode de réalisation, il comprend des dents de section carrée. En remarque, une partie intermédiaire 23 entre ces deux parties 21, 22 de l'implant 20 comprend une évolution progressive du filetage d'une section à l'autre, et comprend de plus des dents avec des micro-filets 24 pour garantir l'étanchéité des dents, utile puisque cette partie intermédiaire 23 est destinée à un positionnement entre la gencive 2 et le massif osseux 1, comme cela est visible sur la figure 13. Globalement, les première et seconde parties 21, 22 de l'implant 20 sont aménagées sur une tige cylindrique de diamètre constant, correspondant au diamètre d'un puits 11 de la barre implantaire. L'implant 20 comprend toutefois une partie conique ou en pointe vers son extrémité inférieure pour faciliter son positionnement dans la mâchoire. Sur toute cette longueur filetée, l'implant 20 possède un pas de filetage constant puisqu'il traverse intégralement le même filetage d'un puits 11 d'une barre implantaire 10.

Le dimensionnement de l'implant représente un compromis entre une taille réduite pour former une armature suffisamment discrète, voire invisible, compatible avec l'utilisation d'une prothèse dentaire ayant une forme proche de la réalité et donc une esthétique acceptable, et entre une taille suffisamment importante pour résister aux efforts mécaniques importants qu'ils subissent. Contrairement aux solutions retenues par l'état de la technique, selon une première approche, l'implant est choisi avantageusement de diamètre inférieur à 3 mm, compris entre 2,5 et 3 mm, et de préférence entre 2,6 et 2,9 mm, voire même entre 2,7 et 2,8 mm, ces bornes étant inclus. Plus généralement, selon une seconde approche, l'implant présente un diamètre compris entre 2,2 et 3,5 mm, de préférence entre 2,3 et 3,4 mm, voire entre 2,4 et 3,3 mm, ces bornes étant inclus. En remarque, tous ces diamètres sont mesurés dans la partie de section constante des première ou seconde parties de l'implant, représente un diamètre maximum de l'implant mesuré au niveau d'une partie de l'implant destinée à traverser un puits d'une barre implantaire. Avantageusement, tous les implants et tous les puits correspondants de la barre implantaire respecteront ces plages de valeurs, le diamètre d'un puits étant toujours légèrement supérieur à celui d'un implant de sorte à lui permettre le passage au travers du puits. L'utilisation de ces implants, de petits diamètres par rapport à l'état de la technique, permet aussi de simplifier leur pose en réduisant fortement les opérations de forage dans le massif osseux. En effet, ces opérations nécessitent l'utilisation progressive de plusieurs forets pour atteindre le diamètre final lorsqu'il est de taille importante, ce qui est long et fastidieux.

D'autre part, l'implant peut être en matériau métallique, peut être en titane ou en alliage de titane (par exemple en TA6V, comprenant du vanadium, de l'aluminium et du titane), et/ou en alliage de chrome/cobalt. Sa longueur est adaptée à la configuration de mâchoire concernée. Pour cela, sa seconde partie 22, destinée à traverser la mâchoire 2, présentera généralement une longueur comprise entre 1 et 5 mm, alors que la première partie 21 destinée à se trouver dans le massif osseux 1 présentera une longueur comprise entre 6 et 14 mm, et en général une longueur comprise entre 8 et 12 mm inclus, de 8, 10 ou 12 mm par exemple.

En remarque, les vis d'ostéosynthèse 19 remplissent une fonction totalement différente d'un implant 20, de simple maintien provisoire durant le traitement et la pose des implants 20. Elles permettent un maintien beaucoup moins résistant que celui d'un implant et ne sont plus très utiles lorsque l'opération est finie. C'est pourquoi elles peuvent être retirées ou laissées, sans conséquence sur l'utilisation ultérieure de la prothèse dentaire. Pour cela, elles présentent un diamètre fileté très inférieur à celui d'un implant, inférieur à 2 mm, voire inférieur à 1,5 mm ou même inférieur à 1,3 mm. De plus, leur longueur totale est aussi inférieure à celle d'un implant, comme cela est par exemple visible sur la figure 13.

La barre implantaire 10 utilisée forme finalement une armature métallique qui assure une liaison entre l'ensemble des implants et de la prothèse dentaire. Cette barre implantaire comprend donc des puits 11 orientées dans une direction verticale, perpendiculaire à la surface supérieure 13 de la barre implantaire 10, pour recevoir les implants 20, comme cela a été explicité, et des ouvertures 12 plus petites, pour recevoir des vis d'ostéosynthèse 19, selon une direction verticale. Le diamètre de ces ouvertures correspond aux diamètres des implants 20 et vis 19 précisés ci-dessus, c'est-à-dire que ce diamètre présente la valeur du diamètre de l'implant, augmentée au minimum de sorte à pour permettre le passage de l'implant. Avantageusement, le jeu sera minimal entre un puits et un implant et on peut considérer que leur diamètre est le même, ou diffère d'environ 0,2 mm, le diamètre du puits mesuré dans sa partie la plus étroite étant alors supérieur de 0,2 mm au diamètre de l'implant, pour permettre son passage au travers le puits, voire supérieur d'au maximum 0,3 mm au diamètre du puits. On considère ici le diamètre du puits au niveau de sa partie la plus étroite, en contact avec la partie située sous la tête de l'implant. Selon une variante, la barre implantaire peut être fixée au cours de sa pose par tout autre moyen que par les vis d'ostéosynthèse représentées. Selon une autre variante, la direction des puits 11 et/ou des ouvertures 12 n'est pas tout à fait verticale, mais reste toutefois proche de la verticale, présente un angle inférieur ou égal à 5 degrés de la direction verticale. Cet angle se mesure donc par rapport à la direction perpendiculaire à la surface supérieure 13 de la barre implantaire, qui présente une section carrée ou rectangulaire, comme cela a été vu précédemment, ou par rapport à la direction perpendiculaire à un plan tangent à sa surface supérieure si cette dernière est différente, par exemple arrondie. Les puits et les éventuelles ouvertures peuvent naturellement présenter des formes différentes de celles représentées, ne pas s'étendre sur une longueur aussi importante par exemple.

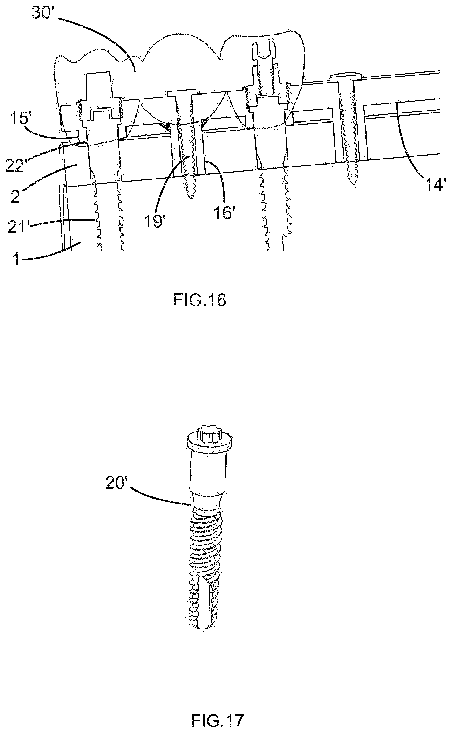

Les figures 15 et 16 représentent un second mode de réalisation qui s'inscrit dans la présente invention, dans lequel un implant 20', plus particulièrement illustré par la figure 17, se présente sous une forme légèrement différente. En effet, il comprend une partie basse 21' destinée à un positionnement dans la structure osseuse, similaire à celle décrite précédemment, et une seconde partie 22' de surface lisse, dont la tête 25' présente une butée 26' en appui sur une surface 18' correspondante d'un puits 11' d'une barre implantaire 10'. Dans ce mode de réalisation, la surface inférieure du puits 11' reste au-dessus de la gencive 2, à proximité de cette dernière. L'implant 20' est recouvert d'un pilier en forme de bague 28', fixé à la tête 25' de l'implant 20' par tout moyen, et vissé dans la partie haute 11' du puits, jusqu'à venir en appui sur la tête 25', notamment sur une surface 27' superposée et parallèle à la butée 26'. Cette configuration assure de même le maintien dans la direction verticale de la barre implantaire 10'. Cette dernière présente une forme légèrement différente que celle utilisée dans le mode de réalisation précédent en ce que ses puits 11' ne présentent pas de partie filetée dans leur extension basse 15' en contact avec les implants 20'. Au contraire, les extensions 16' des ouvertures 12' qui reçoivent les vis d'ostéosynthèse 19' viennent en appui sur le massif osseux 1.

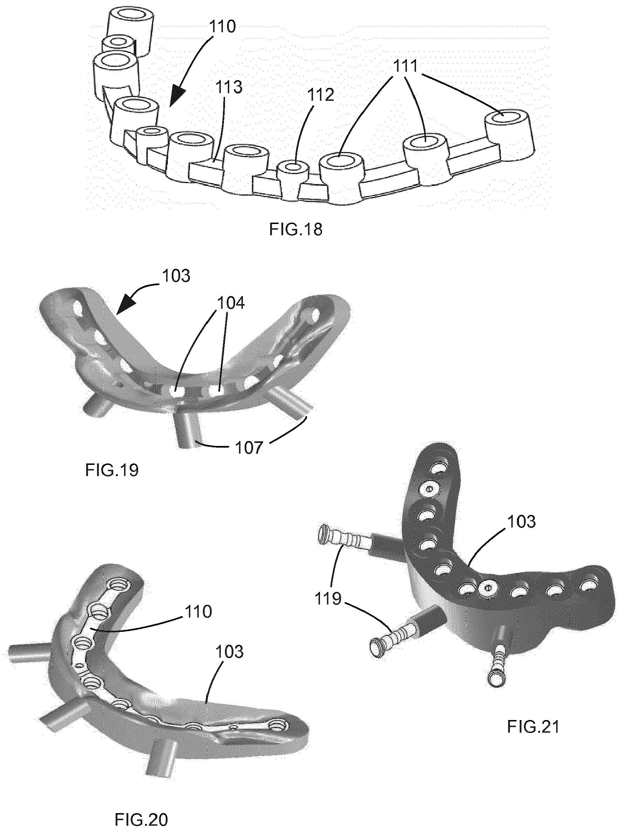

Les figures 18 à 34 illustrent un troisième mode de réalisation qui s'inscrit dans la présente invention, dans lequel les différents éléments du kit de pose de prothèse diffèrent légèrement. Les explications déjà détaillées précédemment ne vont pas être reprises mais s'appliquent toujours.

La barre implantaire 110 représentée sur la figure 18 comprend des puits 111 destinés au guidage des forets utilisés lors des étapes de forage de la gencive et de la structure osseuse et au passage des implants, aménagés au sein de la barre dont la section est sensiblement rectangulaire, et présente une épaisseur d'au moins 4 mm pour remplir sa fonction de guidage puis de maintien d'une prothèse. Cette barre comprend des secondes ouvertures ou piliers, qui contrairement au mode de réalisation précédent, ne sont pas utilisées pour la fixation de vis d'ostéosynthèse mais forment un élément de fixation 112 pour la fixation d'une prothèse sur la surface supérieure 113 de la barre implantaire.
La figure 19 illustre un support 103 de la barre implantaire, qui comprend des ouvertures 104 correspondant aux puits 111 de la barre implantaire. En effet, cette dernière vient se loger au sein de son support, comme représenté par les figures 20 et 21. Le support 103 comprend de plus des ouvertures latérales 107 destinées au passage de vis de maintien 119, qui remplissent une fonction semblable aux vis d'ostéosynthèse mentionnées dans les modes de réalisation précédents.
La première étape du traitement consiste à positionner l'assemblage de la barre implantaire 110 et de son support 103 sur la gencive, et à le fixer par des aiguilles de verrouillage ou vis de maintien 119 pour obtenir son maintien et le maintien temporaire de la barre implantaire. Ensuite, les étapes de forage sont réalisées et les implants positionnés et verrouillés avec les bagues 128 et les vis de fixations 131, comme cela est détaillé ci-dessous.

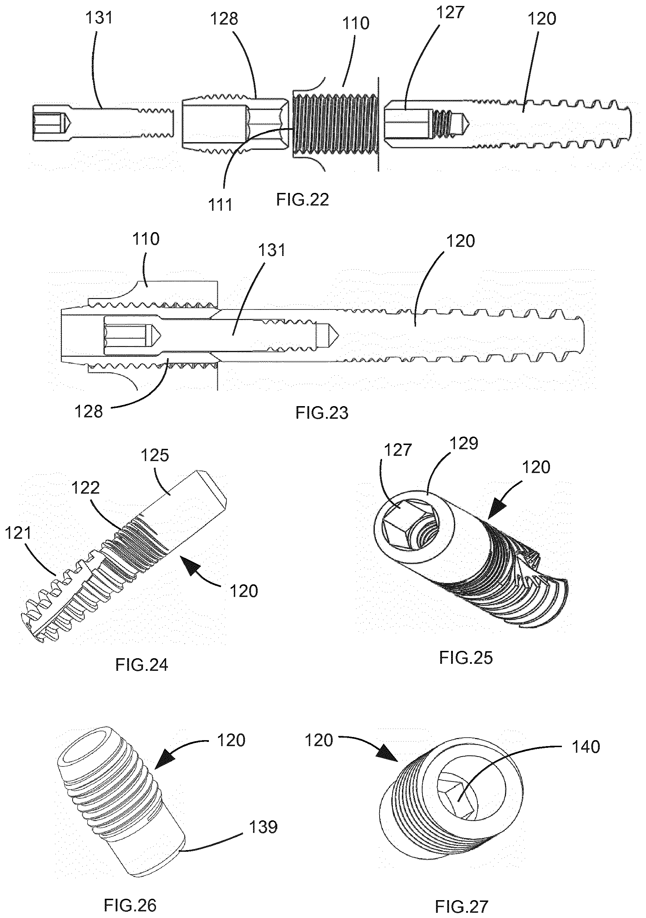

Lorsque ce forage est terminé, les étapes de fixation sont mises en oeuvre. Pour cela, chaque implant 120 est d'abord fixé dans la structure osseuse au travers un puits 111 de la barre implantaire 110. Ensuite, une bague 128 vient se fixer au sein du puits en butée sur la surface supérieure de l'implant. Pour faciliter ce bon positionnement et assurer le maintien de la barre implantaire, le puits 111 comprend avantageusement un taraudage dans lequel la bague 128 vient se visser, pour descendre progressivement jusqu'à atteindre sa position finale en butée sur l'implant. Enfin, une vis de fixation 131 traverse la partie centrale de la bague 128 pour venir se visser dans une partie filetée aménagée dans une partie creuse 127 en surface supérieure de l'implant 120. Ce vissage est poursuivi jusqu'à ce que la tête de cette vis de fixation 131 vienne en butée dans une position dans laquelle elle assure le maintien de la bague 128 et de l'implant 120, comme représenté par les figures 22 et 23. Lorsque la barre implantaire est suffisamment maintenue en place, le support est retiré en enlevant les vis de maintien 119.

Les figures 24 et 25 illustrent l'implant selon ce mode de réalisation. Il présente des parties filetées 121, 122 sur sa surface extérieure, comparables aux deux parties filetées explicitées pour l'implant du mode de réalisation précédent. Sa tête 125 diffère toutefois en ce qu'elle présente un diamètre continu, sensiblement identique à celui des parties filetées, de sorte à traverser aussi totalement ou quasi totalement un puits 111 de la barre implantaire 110. Ce diamètre peut avantageusement être de petite dimension, respectant les plages de valeur détaillées en rapport avec les réalisations précédentes. Enfin, l'implant 120 comprend une partie creuse 127 au niveau de sa tête 125, accessible depuis le haut, comprenant d'abord une surface hexagonale qui permet le vissage de l'implant à l'aide d'une clé adaptée, puis une partie filetée qui permet la fixation de la vis de fixation 131 mentionnée précédemment. Cette partie creuse 127 est délimitée en partie haute de l'implant 120 par une surface conique 129 prévue pour une coopération avec la partie basse d'une bague 128. Naturellement, cette surface pourrait en variante présenter d'autres formes permettant une coopération avec une bague en formant une butée d'appui ou pourrait intégrer tout moyen pour permettre une fixation de la bague sur l'implant, par exemple de type mécanique.

Les figures 26 et 27 illustrent une telle bague, qui présente une forme globalement annulaire, avec une partie filetée sur sa surface extérieure pour coopérer avec un taraudage correspondant prévu au sein d'un puits 111 de la barre implantaire. Naturellement, toute autre technique de fixation pourrait en variante être mise en oeuvre pour fixer la bague dans le puits de la barre implantaire. Elle comprend une surface conique 139 vers son extrémité inférieure qui vient en butée sur la surface conique 129 aménagée en partie haute d'un implant 120. Enfin, la surface intérieure 140 de la bague 128 est aménagée pour permettre son vissage, par exemple par une surface de type hexagonale pour son vissage par l'insertion d'un outil correspondant par le haut.

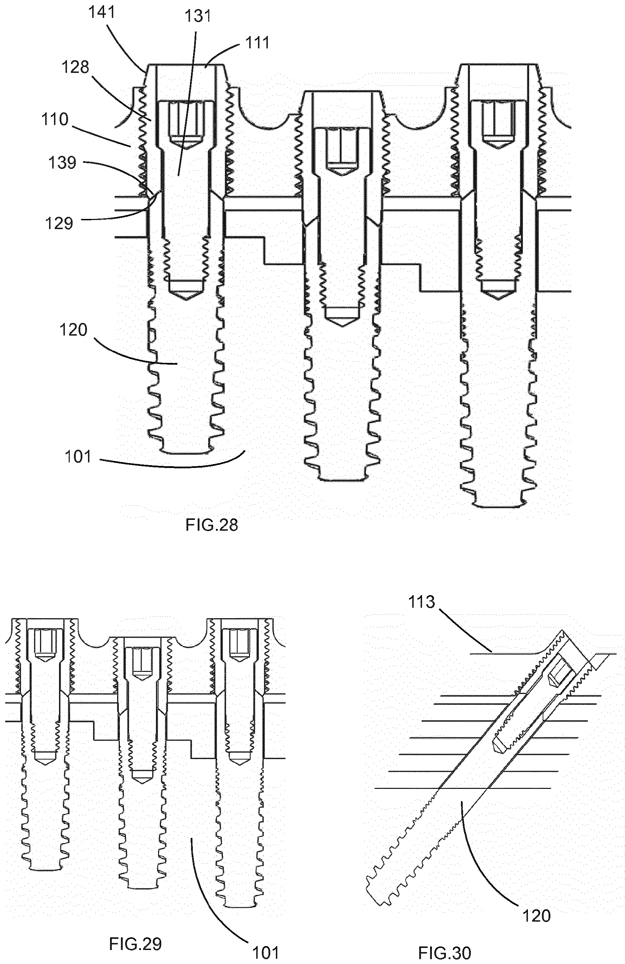

Les figures 28 à 30 illustrent en coupe quelques configurations finales après la pose de tous les composants du kit de pose de prothèse dans une masse osseuse 101. L'implant 120 se trouve ainsi fixé dans la masse osseuse 101, et sa tête 125 se trouve au niveau de la surface inférieure de la barre implantaire 110, de sorte que sa surface supérieure 129 conique vienne légèrement à l'intérieur d'un puits 111 de la barre implantaire, dans lequel une bague 128 a été vissée à l'intérieur jusqu'à ce que sa surface inférieure 139 conique vienne épouser la surface supérieure de l'implant 120, en butée sur cet implant par simple appui. Enfin, une vis de fixation 131 est vissée dans l'implant 120 pour solidariser l'ensemble. La barre implantaire se trouve alors parfaitement fixée par rapport à la masse osseuse, ne peut plus se déplacer dans aucune direction.

En remarque, cette solution présente l'avantage de pouvoir enlever la barre implantaire en cas de besoin, sans retirer les implants. Pour une telle opération, il suffit de dévisser les vis de fixation 131. La solution présente l'avantage supplémentaire d'une grande simplicité lors de son montage. Notamment, la barre implantaire n'est jamais démontée lors des différentes opérations de montage, contrairement aux solutions existantes.

Sur la réalisation de la figure 28, les bagues 128 présentent une hauteur suffisante pour présenter une surface supérieure 141 qui dépasse de la surface supérieure du puits de la barre implantaire, pour former un élément de fixation d'une prothèse sur la barre implantaire, par scellement. Dans la réalisation de la figure 30, ce n'est pas le cas : la fixation d'une prothèse doit donc se faire par un moyen distinct aménagé sur la barre implantaire. En remarque, ce mode de réalisation permet aussi le positionnement d'implants très inclinés, jusqu'à 45° par rapport à la surface supérieure 113 de la barre implantaire, comme représenté par la figure 30 par exemple.

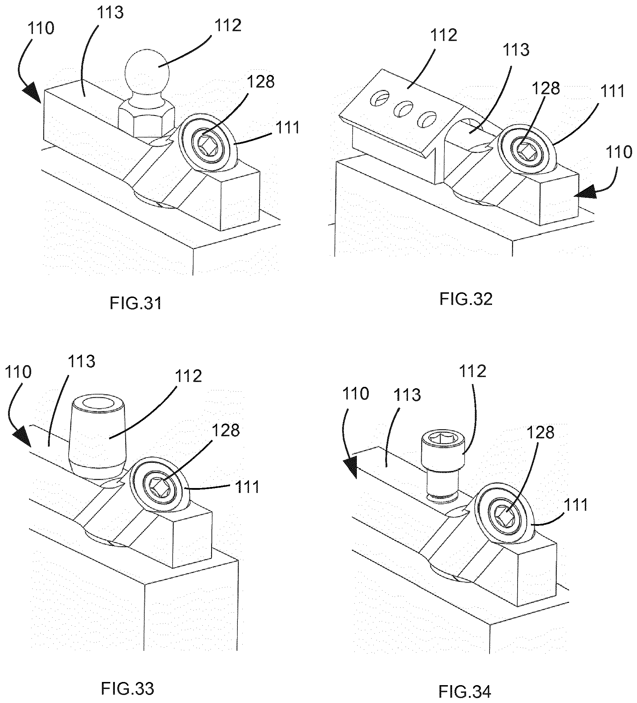

Comme cela a été présenté précédemment, la barre implantaire comprend un élément de fixation d'une prothèse, qui peut être obtenu par un élément de fixation 112 formant un relief sur sa surface supérieure, comme représenté par exemple sur les figures 18 et 28. En variante, cet élément de fixation peut permettre la mise en oeuvre de tout type de fixation, mécanique et/ou par collage, et les figures 31 à 34 illustrent ainsi quelques possibilités à titre d'exemples. L'élément de fixation 112 de la figure 31 permet une fixation par clippage, celui de la figure 32 par un élément de type cavalier, celui de la figure 33 permet un scellement d'une prothèse et celui de la figure 34 permet sa fixation par vissage. En remarque, cette fixation de la prothèse peut ainsi être amovible ou non.

## Revendications

1. Kit de pose d'une prothèse dentaire, comprenant une barre implantaire (10 ; 10' ; 110) pour la pose d'une prothèse dentaire et au moins un implant (20; 20'; 120), la barre implantaire (10 ; 10'; 110) comprenant au moins un puits (11 ; 11' ; 111) pour l'insertion de l'implant (20 ; 20' ; 120), dont le diamètre est compris entre 2,2 et 3,5 mm inclus, ou entre 2,3 et 3,4 mm inclus, ou entre 2,4 et 3,3 mm inclus, ou entre 2,5 et 3 mm inclus, ou entre 2,6 et 2,9 mm inclus, ou entre 2,7 et 2,8 mm inclus, et le kit de pose comprenant au moins une bague (28' ; 128) destinée à une fixation au sein du au moins un puits (11 ; 11' ; 111) de la barre implantaire et à une coopération avec l'implant (20 ; 20' ; 120).

2. Kit de pose d'une prothèse dentaire selon la revendication précédente, **caractérisé en ce que** la barre implantaire (10 ; 10'; 110) comprend au moins un puits (11 ; 11'; 111) de diamètre légèrement supérieur à celui de l'implant prévu pour traverser le puits, la différence de diamètre entre le puits et l'implant étant inférieure ou égale à 0,3 mm.

3. Kit de pose d'une prothèse dentaire selon l'une des revendications précédentes, **caractérisé en ce que** la barre implantaire (10 ; 10' ; 110) comprend un élément de fixation (112) d'une prothèse dentaire (30).

4. Kit de pose d'une prothèse dentaire selon l'une des revendications précédentes, **caractérisé en ce que** la barre implantaire (10 ; 10' ; 110) comprend une épaisseur supérieure ou égale à 4 mm pour lui permettre d'être suffisamment résistante pour guider une opération de forage de gencive et de masse osseuse au travers un puits (11 ; 11' ; 111).

5. Kit de pose d'une prothèse dentaire selon l'une des revendications précédentes, **caractérisé en ce que** la barre implantaire (10 ; 10' ; 110) comprend au moins un puits (11 ; 11'; 111) comprenant une surface intérieure filetée et **en ce qu'**il comprend au moins une bague (28' ; 128) présentant une surface extérieure filetée pour être vissée à l'intérieur du puits jusqu'à venir coopérer avec un implant.

6. Kit de pose d'une prothèse dentaire selon l'une des revendications précédentes, **caractérisé en ce que** l'implant comprend une surface supérieure (27' ; 129) destinée à coopérer avec une surface inférieure d'une bague (28' ; 128).

7. Kit de pose d'une prothèse dentaire selon l'une des revendications précédentes, **caractérisé en ce qu'**il comprend une vis de fixation (131) pour une fixation dans la partie supérieure d'un implant au travers un puits de la barre implantaire tout en solidarisant la bague (28' ; 128).

8. Kit de pose d'une prothèse dentaire selon l'une des revendications précédentes, **caractérisé en ce qu'**il comprend un support (3 ; 103) pour une barre implantaire (10 ; 10' ; 110) comprenant des ouvertures (4 ; 104) dans lesquelles peuvent se loger les puits (11 ; 11' ; 111) de la barre implantaire.

9. Kit de pose d'une prothèse dentaire selon l'une des revendications précédentes, **caractérisé en ce qu'**il comprend des vis d'ostéosynthèse (19 ; 19'; 119) prévues pour le maintien provisoire de la barre implantaire (10; 10'; 110).

10. Kit de pose d'une prothèse dentaire selon l'une des revendications précédentes, **caractérisé en ce qu'**il comprend une prothèse dentaire (30).

11. Kit de pose d'une prothèse dentaire selon l'une des revendications précédentes, **caractérisé en ce que** le au moins un puits (11 ; 11' ; 111) de la barre implantaire (10 ; 10' ; 110) présente un axe selon une direction sensiblement perpendiculaire ou inclinée par rapport à sa surface supérieure (13 ; 13' ; 113).

12. Kit de pose d'une prothèse dentaire selon l'une des revendications précédentes, **caractérisé en ce que** la barre implantaire (10 ; 10' ; 110) comprend une surface (18 ; 18') formant butée pour un implant (20 ; 20') au sein d'un puits (11 ; 11').

13. Kit de pose d'une prothèse dentaire selon l'une des revendications précédentes, **caractérisé en ce que** la barre implantaire (10 ; 10' ; 110) comprend au moins deux puits (11 ; 11') ou au moins trois puits (11 ; 11').

14. Kit de pose d'une prothèse dentaire selon l'une des revendications précédentes, **caractérisé en ce que** la barre implantaire (10 ; 10' ;110) comprend une section carrée ou rectangulaire ou arrondie interrompue par des puits (11 ; 11' ; 111) sensiblement cylindriques.

15. Kit de pose d'une prothèse dentaire selon l'une des revendications précédentes, **caractérisé en ce que** la barre implantaire (10 ; 10') est en matériau métallique, et/ou comprend du titane et/ou un alliage de titane et/ou du chrome-cobalt.

## Patentansprüche

1. Kit zur Befestigung einer Zahnprothese, umfassend eine implantierbare Leiste (10; 10'; 110) zur Befestigung einer Zahnprothese und mindestens eines Implantats (20; 20'; 120), wobei die implantierbare Leiste (10; 10'; 110) mindestens eine Vertiefung (11; 11'; 111) zum Einsetzen des Implantats (20; 20'; 120) umfasst, deren Durchmesser zwischen einschließlich 2,2 und 3,5 mm, oder zwischen einschließlich 2,3 und 3,4 mm, oder zwischen einschließlich 2,4 und 3,3 mm, oder zwischen einschließlich 2,5 und 3 mm, oder zwischen einschließlich 2,6 und 2,9 mm, oder zwischen einschließlich 2,7 und 2,8 mm, liegt, und wobei das Kit zur Befestigung mindestens einen Ring (28'; 128) umfasst, der für eine Fixierung innerhalb mindestens einer Vertiefung (11; 11'; 111) der implantierbaren Leiste und für ein Zusammenwirken mit dem Implantat (20; 20'; 120) bestimmt ist.

2. Kit zur Befestigung einer Zahnprothese nach dem vorhergehenden Anspruch,
**dadurch gekennzeichnet, dass** die implantierbare Leiste (10; 10'; 110) mindestens eine Vertiefung (11; 11'; 111) mit einem Durchmesser umfasst, der geringfügig größer ist als jener des Implantats, das bereitgestellt wird, um die Vertiefungen zu durchqueren, wobei die Durchmesserdifferenz zwischen der Vertiefung und dem Implantat kleiner oder gleich 0,3 mm ist.

3. Kit zur Befestigung einer Zahnprothese nach einem der vorhergehenden Ansprüche,
**dadurch gekennzeichnet, dass** die implantierbare Leiste (10; 10'; 110) ein Fixierelement (112) einer Zahnprothese (30) umfasst.

4. Kit zur Befestigung einer Zahnprothese nach einem der vorhergehenden Ansprüche,
**dadurch gekennzeichnet, dass** die implantierbare Leiste (10; 10'; 110) eine Dicke größer oder gleich 4 mm umfasst, um es dieser zu gestatten, ausreichend beständig zu sein, um einen Vorgang eines Bohrens im Zahnfleisch und in der Knochenmasse quer durch eine Vertiefung (11; 11'; 111) zu führen.

5. Kit zur Befestigung einer Zahnprothese nach einem der vorhergehenden Ansprüche,
**dadurch gekennzeichnet, dass** die implantierbare Leiste (10; 10'; 110) mindestens eine Vertiefung (11; 11'; 111) umfasst, die eine Gewindeinnenfläche aufweist, und dadurch, dass dieses mindestens einen Ring (28'; 128) umfasst, der eine Gewindeaußenfläche aufweist, um in das Innere der Vertiefung geschraubt zu werden, bis es zu einem Zusammenwirken mit einem Implantat kommt.

6. Kit zur Befestigung einer Zahnprothese nach einem der vorhergehenden Ansprüche,
**dadurch gekennzeichnet, dass** das Implantat eine obere Fläche (27'; 129) aufweist, die dazu bestimmt ist, mit einer unteren Fläche eines Rings (28'; 128) zusammenzuwirken.

7. Kit zur Befestigung einer Zahnprothese nach einem der vorhergehenden Ansprüche,
**dadurch gekennzeichnet, dass** dieses eine Fixierschraube (131) für eine Fixierung im oberen Teil eines Implantats quer durch eine Vertiefung der implantierbaren Leiste zur gleichzeitigen Verbindung mit dem Ring (28'; 128) umfasst.

8. Kit zur Befestigung einer Zahnprothese nach einem der vorhergehenden Ansprüche,
**dadurch gekennzeichnet, dass** dieses einen Träger (3; 103) für eine implantierbare Leiste (10; 10'; 110) mit Öffnungen (4; 104) umfasst, in denen die Vertiefungen (11; 11'; 111) der implantierbaren Leiste gelagert werden können.

9. Kit zur Befestigung einer Zahnprothese nach einem der vorhergehenden Ansprüche,
**dadurch gekennzeichnet, dass** dieses Osteosyntheseschrauben (19; 19'; 119) umfasst, die für einen provisorischen Halt der implantierbaren Leiste (10; 10'; 110) bereitgestellt sind.

10. Kit zur Befestigung einer Zahnprothese nach einem der vorhergehenden Ansprüche,
**dadurch gekennzeichnet, dass** dieses eine Zahnprothese (30) umfasst.

11. Kit zur Befestigung einer Zahnprothese nach einem der vorhergehenden Ansprüche,
**dadurch gekennzeichnet, dass** mindestens eine Vertiefung (11; 11', 111) der implantierbaren Leiste (10; 10'; 110) eine Achse in einer Richtung im Wesentlichen rechtwinklig oder geneigt in Bezug auf ihre obere Fläche (13; 13'; 113) aufweist.

12. Kit zur Befestigung einer Zahnprothese nach einem der vorhergehenden Ansprüche,
**dadurch gekennzeichnet, dass** die implantierbare Leiste (10; 10'; 110) eine Fläche (18; 18') aufweist, die eine Anlage für ein Implantat (20; 20') innerhalb einer Vertiefung (11; 11') bildet.

13. Kit zur Befestigung einer Zahnprothese nach einem der vorhergehenden Ansprüche,
**dadurch gekennzeichnet, dass** die implantierbare Leiste (10; 10'; 110) mindestens zwei Vertiefungen (11; 11') oder mindestens drei Vertiefungen (11; 11') umfasst.

14. Kit zur Befestigung einer Zahnprothese nach einem der vorhergehenden Ansprüche,
**dadurch gekennzeichnet, dass** die implantierbare Leiste (10; 10'; 110) einen quadratischen oder rechteckigen oder runden Querschnitt, unterbrochen durch im Wesentlichen zylindrische Vertiefungen (11; 11'; 111), aufweist.

15. Kit zur Befestigung einer Zahnprothese nach einem der vorhergehenden Ansprüche,
**dadurch gekennzeichnet, dass** die implantierbare Leiste (10; 10') aus einem Metallmaterial besteht und/oder Titan und/oder eine Legierung von Titan und/oder Chrom-Kobalt umfasst.

## Claims

1. Kit for fixing a dental prosthesis, comprising an implant bar (10; 10'; 110) for fixing a dental prosthesis and at least one implant (20; 20'; 120), the implant bar (10; 10'; 110) comprising at least one shaft (11; 11'; 111) for the insertion of the implant (20; 20'; 120), whose diameter is between 2.2 and 3.5 mm inclusive, or between 2.3 and 3.4 mm inclusive, or between 2.4 and 3.3 mm inclusive, or between 2.5 and 3 mm inclusive, or between 2.6 and 2.9 mm inclusive, or between 2.7 and 2.8 mm inclusive, and the fixing kit comprising at least one ring (28'; 128) intended to be fastened within the at least one shaft (11; 11'; 111) of the implant bar and to interact with the implant (20; 20'; 120).

2. Kit for fixing a dental prosthesis according to the preceding claim, **characterized in that** the implant bar (10; 10'; 110) comprises at least one shaft (11; 11'; 111) with a diameter slightly greater than that of the implant provided to pass through the shaft, the difference in diameter between the shaft and the implant being less than or equal to 0.3 mm.

3. Kit for fixing a dental prosthesis according to either of the preceding claims, **characterized in that** the implant bar (10; 10'; 110) comprises an element (112) for fastening a dental prosthesis (30).

4. Kit for fixing a dental prosthesis according to one of the preceding claims, **characterized in that** the implant bar (10; 10'; 110) has a thickness greater than or equal to 4 mm so as to enable it to be strong enough to guide a gum and bone mass drilling operation through a shaft (11; 11'; 111).

5. Kit for fixing a dental prosthesis according to one of the preceding claims, **characterized in that** the implant bar (10; 10'; 110) comprises at least one shaft (11; 11'; 111) comprising a threaded inner surface, and **in that** it comprises at least one ring (28'; 128) having a threaded outer surface so as to be screwed inside the shaft until coming into interaction with an implant.

6. Kit for fixing a dental prosthesis according to one of the preceding claims, **characterized in that** the implant comprises an upper surface (27'; 129) intended to interact with a lower surface of a ring (28'; 128).

7. Kit for fixing a dental prosthesis according to one of the preceding claims, **characterized in that** it comprises a fastening screw (131) for fastening in the upper part of an implant through a shaft of the implant bar while at the same time holding the ring (28'; 128).

8. Kit for fixing a dental prosthesis according to one of the preceding claims, **characterized in that** it comprises a support (3; 103) for an implant bar (10; 10'; 110) comprising apertures (4; 104) in which the shafts (11; 11'; 111) of the implant bar are able to be housed.

9. Kit for fixing a dental prosthesis according to one of the preceding claims, **characterized in that** it comprises osteosynthetic screws (19; 19'; 119) provided to temporarily hold the implant bar (10; 10'; 110).

10. Kit for fixing a dental prosthesis according to one of the preceding claims, **characterized in that** it comprises a dental prosthesis (30).

11. Kit for fixing a dental prosthesis according to one of the preceding claims, **characterized in that** the at least one shaft (11; 11'; 111) of the implant bar (10; 10'; 110) has an axis in a direction that is substantially perpendicular or inclined with respect to its upper surface (13; 13'; 113).

12. Kit for fixing a dental prosthesis according to one of the preceding claims, **characterized in that** the implant bar (10; 10'; 110) comprises a surface (18; 18') forming a stop for an implant (20; 20') within a shaft (11; 11').

13. Kit for fixing a dental prosthesis according to one of the preceding claims, **characterized in that** the implant bar (10; 10'; 110) comprises at least two shafts (11; 11') or at least three shafts (11; 11').

14. Kit for fixing a dental prosthesis according to one of the preceding claims, **characterized in that** the implant bar (10; 10'; 110) has a square or rectangular or round cross section interrupted by substantially cylindrical shafts (11; 11'; 111).

15. Kit for fixing a dental prosthesis according to one of the preceding claims, **characterized in that** the implant bar (10; 10') is made of metal, and/or comprises titanium and/or a titanium alloy and/or chrome cobalt.
